# DEMANDE DE BREVET EUROPEEN

(11) **EP 2 075 752 A1**
(43) Date de publication de la demande: **01.07.2009**
(21) Numéro de dépôt: 08172306.6
(22) Date de dépôt: 19.12.2008
(51) Int. Cl.: G06Q 30/00

(54) **Methode et dispositif de gestion de données de profils s'utilisateurs avec mesure d'incertitude**

(30) Priorité: 26.12.2007 FR 0760358
(71) Demandeur: Alcatel Lucent, 75008 Paris (FR)
(72) Inventeur: Aghasaryan, Armen c/o Alcatel-Lucent Bell Labs Fr., 91620, NOZAY (FR); Betge-brezetz, Stéphane c/o Alcatel-Lucent Bell, 91620, NOZAY (FR); Senot, Christophe c/o Alcatel-Lucent Bell Labs Fr., 91620, NOZAY (FR); TOMS, Yann c/o Alcatel-Lucent Bell Labs France, 91620, NOZAY (FR)
(74) Mandataire: Hedarchet, Stéphane

(57) **Abrégé**

Dispositif (1) de gestion de données de profils d'utilisateurs apte à coopérer à des moyens (7) de traitement d'au moins une partie de données de profil d'au moins un utilisateur (2), le dispositif comprenant :
Des moyens (3, 4, 5) de réception de réactions d'utilisateurs concernant ledit traitement,
- Des moyens (6) d'estimation d'une incertitude liée aux données de profil traitées en fonction des réactions reçues.

Méthode associée.

## Description

La présente invention concerne une méthode et un dispositif de gestion de données de profils d'utilisateurs.

De nos jours, en raison de l'explosion des services, les utilisateurs finaux font face à une multitude d'offres de service (service dit "Triple Play", services de portail 3G, télévision sur mobile, etc). Ceci explique la complexité croissante dans les usages de services, accentuée par la diversité des terminaux existants et de réseaux pouvant soutenir ces services. En conséquence, les techniques dites de profilage des utilisateurs deviennent nécessaires pour les plateformes des opérateurs et des fournisseurs de service, ceci afin de mieux appréhender le comportement de leurs clients et de leur délivrer des applications les mieux personnalisées telles que des publicités ciblées.

L'industrie des hautes technologies s'est déjà attaquée à ces techniques de profilage. En particulier, dans l'industrie de l'internet, un acteur majeur tel que Google™ dispose d'outils de profilage, de même que Yahoo™ en dispose avec son système de recommandation de contenus. Ces systèmes prennent en compte la fréquence du mot-clé apparu dans différents contextes d'usage (recherche, navigation sur le réseau internet, etc.).

Cependant, ces systèmes ne couvrent pas les aspects de mesure d'incertitude en relation avec la donnée considérée (la donnée d'entrée, le résultat retourné, etc.). De façon plus générale, pour de telles applications commerciales, une modélisation déterministe du profil des utilisateurs n'est pas suffisante étant donné que l'incertitude liée à la connaissance du profil n'est pas prise en compte. Or, une telle connaissance sur L'incertitude du profil est critique pour assurer que les contenus et les services personnalisés délivrés aux utilisateurs finaux sont pertinents.

L'invention a pour but de remédier aux problèmes cités. A cet effet, l'invention a pour objet un dispositif de gestion de données de profils d'utilisateurs, comprenant :
- Des moyens de traitement d'au moins une partie de données de profil d'au moins un utilisateur,
- Des moyens de réception de réactions concernant ledit traitement,
- Des moyens d'estimation d'une incertitude liée aux données de profil traitées en fonction des réactions reçues.

Ainsi, l'invention permet de détecter, modéliser et surveiller l'évolution des incertitudes liées aux données de profils d'utilisateurs.

Selon un mode de réalisation, les moyens de réception de réactions concernant ledit traitement comprennent des moyens de réception de réactions sur les applications personnalisées, destiné à collecter les différents types de réactions d'utilisateurs sur la pertinence des choix effectués dans la personnalisation des applications personnalisées émises à leur encontre.

Selon un mode de réalisation, les moyens de réception de réactions concernant ledit traitement comprennent des moyens de réception de réactions d'utilisateurs sur la fiabilité des données de profil, ces réactions pouvant notamment être des notations formulées par les utilisateurs sur la validité de Leur propre profil.

Selon un mode de réalisation, les moyens de réception de réactions concernant ledit traitement comprennent des moyens de réception de données de traces de consommation de contenus par les utilisateurs.

Selon un mode de réalisation, le dispositif selon l'invention comporte des moyens d'estimation des incertitudes liées aux données de profil.

Selon un mode de réalisation, le dispositif selon l'invention comporte des moyens d'agrégation de réactions des utilisateurs, les incertitudes liées aux données de profil étant estimées à partir de ces agrégations.

l'invention a également pour objet une méthode de gestion de données de profils d'utilisateurs, comprenant les étapes suivantes :
- traitement d'au moins une partie de données de profil d'au moins un utilisateur,
- réception de réactions concernant ledit traitement,
- estimation de l'incertitude liée aux données de profil traitées en fonction des réactions reçues.

L'invention a également pour objet un programme d'ordinateur implémentant la méthode de gestion de profils d'utilisateurs selon l'invention.

D'autres caractéristiques, détails et avantages de l'invention ressortiront plus clairement de la description détaillée donnée ci-après à titre indicatif en relation avec la figure sur laquelle :

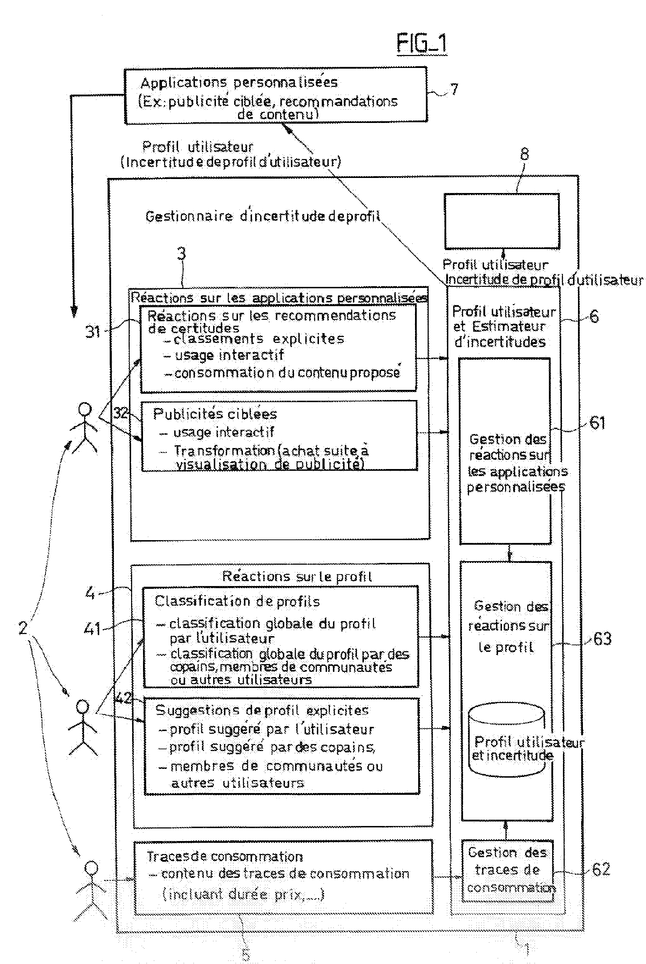

- la figure 1 représente schématiquement un dispositif de gestion de données de profils d'utilisateurs selon un mode de réalisation de l'invention.

La figure 1 annexée représente schématiquement un dispositif 1 de gestion de données de profils d'utilisateurs selon un mode de réalisation de l'invention. Ce dispositif de gestion 1 est destiné à calculer le profil ainsi que les incertitudes liées aux données de profits des utilisateurs à partir de données et de réactions qu'il reçoit en entrée provenant d'utilisateurs 2.

Le dispositif 1 comprend d'abord un module 3 récepteur de réactions sur les applications personnalisées, destiné à collecter les différents types de réactions des utilisateurs sur la pertinence de la personnalisation des services proposés. Ce module 3 comprend une base 31 de réactions d'utilisateurs formulées suite à des recommandations de contenus transmises à ces utilisateurs. Cette base 31 de réactions comprend notamment une classification explicite formulée par les utilisateurs (c'est à dire une notation sur la justesse de la recommandation de contenus), des données d'usage d'interactivité, des informations de consommation du contenu proposé. Le module 3 comprend également une base 32 de réactions d'utilisateurs formulées suite à des publicités ciblées transmises à ces utilisateurs. Cette base 32 comprend par exemple des données d'usage d'interactivité (demande de plus d'informations sur un produit par un clic sur un menu suggéré), des mesures de taux de transformation (actes d'achat consécutivement à des visualisations des publicités, etc.)

Le dispositif 1 comprend également un module 4 récepteur de réactions sur les données de profil. Ce module 4 comprend une base 41 de réactions des utilisateurs classifiant leurs données de profil, c'est à dire par notation des utilisateurs sur la validité de leur propre profil (par exemple 10/10 pour un profil correspondant exactement à la personne et le contraire pour un profil ne correspondant que de très peu à l'utilisateur). La notation peut être également apportée par des membres de communautés auxquelles apparient l'utilisateur concerné (une communauté est un groupe de personnes partageant un ou pleurs intérêts communs) ou même d'autres utilisateurs. Le module 4 comprend encore une base 42 de déclarations explicites formulées par les utilisateurs concernant leurs propres profils. Les déclarations sont explicites pour traduire leur caractère volontaire. Les données de profil sont suggérées par les utilisateurs concernant leurs propres profils, et peuvent être également suggérées par les membres de leurs communautés ou encore d'autres utilisateurs.

Le dispositif 1 comprend également un module 5 récepteur de données de traces de consommation de contenus. De telles données peuvent généralement être riches, denses et fiables puisque retraçant la réalité des actions des utilisateurs. De manière générale, les traces peuvent provenir de services classiques comme un serveur de vidéo à la demande, de communication voix, de SMS, des informations collectées sur des différents portails communautaires... Ce sont généralement des journaux sous la forme d'enregistrements de données d'appel ou CDR (de l'anglais Call Data Record) ou de cookies par exemple. Elles contiennent des informations relatives aux consommations et aux interactions faites par l'utilisateur 2 au travers de différents services.

Il peut également s'agir des traces d'utilisation des services de communautés. Ces traces sont recueillies auprès des sites gérant les communautés et comprennent toutes les traces d'activité d'un utilisateur 2 en rapport avec la ou les communautés: ses actions, ses intérêts, ses communications avec les autres membres, leur fréquences, les éléments publiés par l'utilisateur lui-même tel que ses billets, ses blogs, etc. Un autre exemple de traces est constitué par les traces d'échanges entre utilisateurs des communautés. Ainsi les e-mails, les chats ou tout autres messages échangés entre des utilisateurs identifiés comme membres de communautés peuvent avec profit être observés pour en déduire certains mots clés concernant des centres d'intérêts identifiés ou encore pour détecter quel utilisateur est en contact avec quel autre, et par exemple la fréquence de leurs contacts.

Le dispositif 1 comporte un module 6 estimateur des incertitudes liées aux données de profil. Ce module 6 est relié en entrée aux différents modules 3, 4 et 5. Plus précisément, un module 61 de gestion des réactions sur les applications personnalisées agrège les réactions collectées par le module 3 qui utilise le profil courant pour leur logique de personnalisation. Ce module 61 estime en premier lieu les profils réels des utilisateurs en prenant en compte les réactions collectées par le module 3.

Un module 62 de gestion des traces de consommation de contenus agrège les différentes traces de consommation collectées par le module 5. Ce module 62 estime en premier lieu les profils réels des utilisateurs en prenant en compte les réactions collectées par le module 5.

Enfin, un module 63 de gestion des réactions sur les profils agrège les réactions directes sur les profils collectées par le module 4 ainsi que les estimations d'incertitudes de profils des utilisateurs effectuées par les modules 61 et 63. Ce module 63 est destiné à estimer finement les profils des utilisateurs et leurs mesures d'incertitudes associées. Ces dernières données sont alors transmises à des entités extérieures 7 qui exploitent et traitent ces données de profils et d'incertitudes associées de manière à optimiser la délivrance de services tels que des applications personnalisées du type publicités ciblées, recommandations de contenus, etc à adresser aux utilisateurs 2. De la sorte, l'invention permet également d'augmenter la satisfaction de l'utilisateur de par les contenus proposés qui correspondent au mieux avec ses propres centres d'intérêt.

Le dispositif 1 comporte enfin, dans ce mode de réalisation illustré, d'une interface 8 administrateur de profils d'utilisateurs en charge de visualiser à l'administrateur du dispositif les estimations courantes des profils d'utilisateurs avec leurs mesures d'incertitudes associées.

## Revendications

1. Dispositif (1) de gestion de données de profils d'utilisateurs apte à coopérer à des moyens (7) de traitement d'au moins une partie de données de profil d'au moins un utilisateur (2), le dispositif comprenant :
- Des moyens (3, 4, 5) de réception de données de réactions d'utilisateurs concernant ledit traitement,
- Des moyens (6) d'estimation d'une incertitude liée aux données de profil traitées en fonction des données de réactions reçues.

2. Dispositif selon la revendication 1, **caractérisé en ce que** les moyens de réception de réactions concernant ledit traitement comprennent des moyens (3) de réception de réactions sur les applications personnalisées, destiné à collecter les différents types de réactions d'utilisateurs sur l'efficacité des applications personnalisées émises à leur encontre.

3. Dispositif selon la revendication **1** ou 2, **caractérisé en ce que** les moyens de réception de réactions concernant ledit traitement comprennent des moyens (4) de réception de réactions d'utilisateurs sur la fiabilité des données de profil, ces réactions pouvant notamment être des notations formulées par les utilisateurs sur la validité de leur propre profil.

4. Dispositif selon la revendication 1, 2 ou 3, **caractérisé en ce que** les moyens de réception de réactions concernant ledit traitement comprennent des moyens (5) de réception de données de traces de consommation de contenus par les utilisateurs.

5. Dispositif selon l'une des revendications 1 à 4, **caractérisé en ce qu'**il comporte des moyens (6) d'estimation des incertitudes liées aux données de profil.

6. Dispositif selon la revendication 5, **caractérisé en ce qu'**il comporte des moyens d'agrégation (61, 62, 63) de réactions des utilisateurs, les incertitudes liées aux données de profil étant estimées à partir de ces agrégations.

7. Méthode de gestion de données de profils d'utilisateurs, comprenant les étapes suivantes :
traitement d'au moins une partie de données de profil d'au moins un utilisateur,
- réception de données de réactions concernant ledit traitement,
- estimation d'une incertitude liée aux données de profil traitées en fonction des données de réactions reçues.
